# EUROPÄISCHE PATENTSCHRIFT

(11) **EP 2 118 691 B1**
(45) Veröffentlichungstag und Bekanntmachung des Hinweises auf die Patenterteilung: **16.11.2016**
(21) Anmeldenummer: 08715491.0
(22) Anmeldetag: 11.02.2008
(51) Int. Cl.: G02B 1/11

(54) **VERFAHREN ZUR HERSTELLUNG EINES OPTISCHEN ELEMENTS MIT EINER REFLEXIONSMINDERNDEN ANTIBESCHLAGSSCHICHT**
METHOD FOR PRODUCING AN OPTICAL ELEMENT HAVING A REFLECTION-REDUCING ANTI-FOG LAYER
PROCÉDÉ DE RÉALISATION D'UN ÉLÉMENT OPTIQUE COMPRENANT UNE COUCHE ANTI-CONDENSATION

(30) Priorität: 27.02.2007 DE 102007009512
(43) Veröffentlichungstag der Anmeldung: 18.11.2009
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: SCHULZ, Ulrike, 07751 Jena (DE); WENDLING, Irmina, 22149 Hamburg (DE); MUNZERT, Peter, 07743 Jena (DE); KAISER, Norbert, 07745 Jena (DE)
(74) Vertreter: Epping - Hermann - Fischer
(86) Internationale Anmeldenummer: PCT/DE2008/000267
(87) Internationale Veröffentlichungsnummer: WO 2008/104150

(56) Entgegenhaltungen:
- EP-A- 0 429 009
- EP-A- 0 502 633
- EP-A- 0 871 046
- WO-A-00/00855
- DE-A1- 10 241 708
- JP-A- 2004 045 671
- US-A1- 2004 067 339
- US-A1- 2006 046 046

## Beschreibung

Die Erfindung betrifft ein Herstellungsverfahren gemäß dem Oberbegriff des Patentanspruchs 1.

Bei optischen Elementen aus Glas oder Kunststoff besteht oftmals das Problem, dass sich in einer feuchten Umgebung und insbesondere bei Temperaturwechseln Beschlag auf der Oberfläche bilden kann, wodurch die Transmission des optischen Elements beeinträchtigt wird.

Aus den Druckschriften JP 2001/097744 A und EP 0782015 A2 ist bekannt, zur Vermeidung von Beschlag auf der Oberfläche eines optischen Elements eine beschlagsmindernde Polymerschicht (Antifog-Schicht) auf das optische Element aufzubringen. Beschlagsmindernde Polymerschichten enthalten in der Regel stark hydrophile Polymere, die Wasser aufnehmen können, so dass beim Kondensieren von Wasser entstehende feine Wassertröpfchen innerhalb kurzer Zeit von der Schicht aufgenommen werden.

Neben der Vermeidung von Beschlag ist es bei optischen Elementen wünschenswert, die Reflexion der Oberfläche zu vermindern, um eine bessere Transparenz zu erzielen. Dazu werden üblicherweise eine oder mehrere dünne Entspiegelungsschichten auf das optische Element aufgebracht, deren reflexionsmindernde Wirkung auf optischer Interferenz beruht.

Aus der Patentschrift DE 102 41 708 B4 ist ein alternatives Verfahren zur Reduzierung der Reflexion von Kunststoffsubstraten bekannt, bei dem an einer Oberfläche eines Substrats aus einem Kunststoff mittels eines Plasmaätzprozesses eine Nanostruktur erzeugt wird. Dabei wird die Nanostruktur durch Beschuss der Substratoberfläche mit energiereichen Ionen, welche mittels einer Plasma-Ionenquelle erzeugt werden, hergestellt.

Um sowohl den Beschlag als auch die Reflexion der Oberfläche eines optischen Elements zu vermindern, wird in der Druckschrift EP 0871046 A1 vorgeschlagen, eine poröse Oxidschicht auf die beschlagsmindernde Polymerschicht aufzubringen, deren Dicke so gewählt ist, dass sie die Reflexion vermindert.

Weiterhin wird in der Druckschrift US 2003/0030909 A1 vorgeschlagen, eine dünne Oxidschicht zwischen einer vergleichsweise dicken beschlagsmindernden Polymerschicht und einer weiteren dünnen beschlagsmindernden Polymerschicht einzubetten. Bei beiden vorgeschlagenen Lösungen wird eine antireflektierende Wirkung durch die Interferenz an den dünnen Schichten erzielt.

Das Aufbringen einer oder mehrerer zusätzlicher Schichten auf eine beschlagsmindernde Polymerschicht kann jedoch den Nachteil haben, dass dadurch die Wasseraufnahme der Polymerschicht beeinträchtigt wird. Weiterhin kann bei derartigen Interferenzschichtsystemen das Problem auftreten, dass bei schrägem Lichteinfall keine optimale Entspiegelung erzielt wird oder unerwünschte Farbeindrücke auftreten.

Die Druckschrift JP 2004/045671 A offenbart ein Verfahren gemäß dem Oberbegriff des Patentanspruchs 1.

Der Erfindung liegt die Aufgabe zugrunde, ein Verfahren zur Herstellung eines verbesserten optischen Elements mit einer reflexions- und beschlagsmindernden Beschichtung anzugeben.

Diese Aufgabe wird durch ein Verfahren gemäß Patentanspruch 1 gelöst. Vorteilhafte Ausgestaltungen der Erfindung sind Gegenstand der abhängigen Ansprüche.

Die an der Oberfläche der beschlagsmindernden Polymerschicht erzeugte Nanostruktur hat insbesondere den Vorteil, dass sie auch bei schrägem Lichteinfall farbneutral wirkt und eine gute reflexionsmindernde Wirkung aufweist. Weiterhin wird die beschlagsmindernde Wirkung durch die an der Oberfläche der beschlagsmindernden Polymerschicht erzeugte Nanostruktur nur unwesentlich beeinträchtigt.

Die Nanostruktur an der Oberfläche der beschlagsmindernden Polymerschicht, die mittels eines Plasmaätzverfahrens erzeugt wird, erstreckt sich vorteilhaft von der Oberfläche der beschlagsmindernden Polymerschicht bis in eine Tiefe von 50 nm oder mehr in die beschlagsmindernde Polymerschicht hinein. Besonders bevorzugt erstreckt sich die Nanostruktur von der Oberfläche der beschlagsmindernden Polymerschicht bis in eine Tiefe zwischen 80 nm und 600 nm in die beschlagsmindernde Polymerschicht hinein.

Bei der beschlagsmindernden Polymerschicht handelt es sich vorzugsweise um eine Lackschicht, insbesondere um eine thermisch härtbare oder mittels UV-Licht härtbare Lackschicht.

Die beschlagsmindernde Polymerschicht kann insbesondere ein Polyurethan, ein Polyol, eine Poly(ethylen-alt-maleinsäure), ein Siloxan oder ein Acrylat enthalten.

Die Dicke der beschlagsmindernden Polymerschicht beträgt vorzugsweise zwischen einschließlich 1 µm und einschließlich 20 µm.

Das optische Element enthält vorzugsweise einen Kunststoff oder ein Glas. Bei dem Kunststoff kann es sich insbesondere um eines der Polymere Polymethylmethacrylat, Polycarbonat, Polyethersulfon, Polycycloolefin, CR39, Polythiourethan, Polyethylenterephtalat (PET) oder Triacetylacetat (TAC) handeln.

Das optische Element kann insbesondere eine optische Linse, ein Brillenglas, ein Schutzschild, eine OP-Maske, ein Motorradhelmvisier oder eine Displayabdeckung sein. Insbesondere kann es sich bei dem optischen Element, wie beispielsweise bei einer Displayabdeckung, um eine Folie handeln, beispielsweise um eine PET-Folie oder eine TAC-Folie.

Eine transparente Schutzschicht kann auf die Nanostruktur aufgebracht werden. Die transparente Schutzschicht schützt die die erzeugte Nanostruktur vor äußeren Einwirkungen, insbesondere vor mechanischen Beschädigungen, die beispielsweise bei der Reinigung der Oberfläche auftreten könnten.

Die Dicke der transparenten Schutzschicht wird vorzugsweise derart gewählt, dass einerseits die Nanostruktur ausreichend vor äußeren Einflüssen geschützt ist, andererseits aber die reflexionsmindernde Wirkung nicht verloren geht. Besonders bevorzugt beträgt die Dicke der transparenten Schutzschicht zwischen einschließlich 10 nm und einschließlich 50 nm. Besonders geeignet zur Ausbildung einer transparenten Schutzschicht ist ein Siliziumoxid, insbesondere SiO₂.

Eine hydrophobe Schicht kann auf die Nanostruktur oder, falls zuvor eine transparente Schutzschicht aufgebracht wurde, zusätzlich auf die transparente Schutzschicht aufgebracht werden.

Die hydrophobe Schicht kann insbesondere eine fluorenthaltende organische Verbindung, beispielsweise ein Fluoralkylsilan, oder Silikon enthalten. Durch die hydrophobe Schicht kann ein Kontaktwinkel gegen Wasser von mehr als 110°, insbesondere zwischen 110° und 160° erzielt werden. Durch das Aufbringen der hydrophoben Schicht wird insbesondere eine Reinigung der Oberfläche erleichtert.

Die hydrophobe Schicht weist bevorzugt eine Dicke von 1 nm bis 10 nm auf. Besonders bevorzugt beträgt die Dicke der hydrophoben Schicht weniger als 5 nm.

Bei dem erfindungsgemäßen Verfahren zur Herstellung einer reflexions- und beschlagsmindernden Schicht auf der Oberfläche eines optischen Elements wird eine beschlagsmindernde Polymerschicht auf die Oberfläche des optischen Elements aufgebracht, nachfolgend eine dünne Schicht auf die beschlagsmindernde Polymerschicht aufgebracht, und nachfolgend mittels eines Plasmaätzverfahrens eine Nanostruktur an der Oberfläche der beschlagsmindernden Polymerschicht erzeugt.

Der Plasmaätzvorgang wird also durch die zuvor aufgebrachte dünne Schicht hindurch ausgeführt, wobei die dünne Schicht ganz oder zumindest teilweise abgetragen wird. Das Aufbringen der dünnen Schicht vor der Durchführung des Plasmaätzprozesses hat den Vorteil, dass sich auf diese Weise eine reflexionsmindernde Nanostruktur auch auf beschlagsmindernden Polymeren herstellen lässt, bei denen dies mit einem herkömmlichen Plasmaätzprozess nur schwer oder mit einer vergleichsweise langen Behandlungszeit möglich wäre. Die Dauer des Plasmaätzprozesses beträgt vorzugsweise 400 s oder weniger.

Die dünne Schicht, die vor der Durchführung des Plasmaätzprozesses auf die beschlagsmindernde Polymerschicht aufgebracht wird, ist bevorzugt eine Oxidschicht, eine Nitridschicht oder eine Fluoridschicht. Insbesondere kann es sich bei der dünnen Schicht um eine Siliziumoxid-, Siliziumnitrid-, Titanoxid- oder Magnesiumfluoridschicht handeln.

Die Dicke der dünnen Schicht beträgt bevorzugt 2 nm oder weniger, besonders bevorzugt 1,5 nm oder weniger. Unter der Dicke der dünnen Schicht ist im Rahmen der Erfindung eine mittlere Schichtdicke zu verstehen, falls es sich bei der dünnen Schicht um eine nicht-kontinuierliche, insbesondere um eine inselförmige Schicht, handelt.

Das Aufbringen der dünnen Schicht erfolgt bevorzugt durch ein PVD (Physical Vapor Deposition)-Verfahren, insbesondere durch Sputtern oder Vakuumbedampfung. Beispielsweise kann eine dielektrische Oxid- oder Nitridschicht durch reaktives Sputtern, insbesondere Magnetronsputtern, von einem metallischen Target hergestellt werden.

Der Plasmaätzprozess, der zur Bildung der reflexionsmindernd wirkenden Nanostruktur in der beschlagsmindernden Polymerschicht führt, wird vorzugsweise unmittelbar nach dem Aufbringen der dünnen Schicht durchgeführt. Die Durchführung des Plasmaätzprozesses erfolgt vorteilhaft mittels eines Plasmas, das Sauerstoff enthält. Der Plasmaätzprozess ist an sich aus der Patentschrift DE 10241708 B4 bekannt.

Bei einer bevorzugten Ausführungsform des erfindungsgemäßen Verfahrens wird eine transparente Schutzschicht auf die Nanostruktur aufgebracht, beispielsweise eine Schutzschicht aus einem Siliziumoxid. Die Dicke der transparenten Schutzschicht beträgt bevorzugt zwischen einschließlich 10 nm und einschließlich 50 nm.

Bei einer bevorzugten Ausführungsform der Erfindung wird in einem weiteren Verfahrensschritt eine hydrophobe Schicht auf die Nanostruktur oder gegebenenfalls auf die zuvor erzeugte Schutzschicht aufgebracht. Die Schutzschicht kann beispielsweise Silikon oder bevorzugt ein fluorhaltiges organisches Material enthalten. Sie weist vorzugsweise eine Schichtdicke zwischen 1 nm und 10 nm, besonders bevorzugt von weniger als 5 nm auf. Das Aufbringen der hydrophoben Schicht erfolgt beispielsweise durch Vakuumbeschichtung, insbesondere durch thermisches Verdampfen, oder durch ein Tauchverfahren (Dip-Coating).

Das Aufbringen der hydrophoben Schicht hat den Vorteil, dass sich der Kontaktwinkel gegenüber Wasser erhöht, so dass die auf diese Weise erzeugte Oberfläche mindestens hydrophobe Eigenschaften, besonders bevorzugt sogar superhydrophobe Eigenschaften aufweist. Insbesondere kann erreicht werden, dass die mit der hydrophoben Schicht versehene Oberfläche gegenüber Wasser einen Kontaktwinkel von mehr als 90° aufweist. Die beschlagsmindernde Wirkung der beschlagsmindernden Polymerschicht wird durch die hydrophobe Schicht nur geringfügig verzögert, beispielsweise um etwa 5 s bis maximal 30 s.

Die Erfindung wird im Folgenden anhand von Ausführungsbeispielen im Zusammenhang mit den Figuren 1 bis 5 näher erläutert.

Es zeigen:
- Figuren 1A, 1B und 1C: eine schematische Darstellung eines Ausführungsbeispiels des erfindungsgemäßen Verfahrens anhand von Zwischenschritten,
- Figur 2: eine schematische Darstellung eines optischen Elements gemäß einem Ausführungsbeispiel der Erfindung,
- Figur 3: eine schematische Darstellung eines optischen Elements gemäß einem weiteren Ausführungsbeispiel der Erfindung,
- Figur 4: eine schematische Darstellung eines optischen Elements gemäß einem weiteren Ausführungsbeispiel der Erfindung, und
- Figur 5: die Transmission in Abhängigkeit von der Wellenlänge für zwei optische Elemente gemäß Ausführungsbeispielen der Erfindung im Vergleich zu zwei herkömmlichen optischen Elementen.

Gleiche oder gleichwirkende Elemente sind in den Figuren mit den gleichen Bezugszeichen versehen. Die Figuren sind nicht als maßstabsgerecht anzusehen, vielmehr können einzelne Elemente zur Verdeutlichung übertrieben groß dargestellt sein.

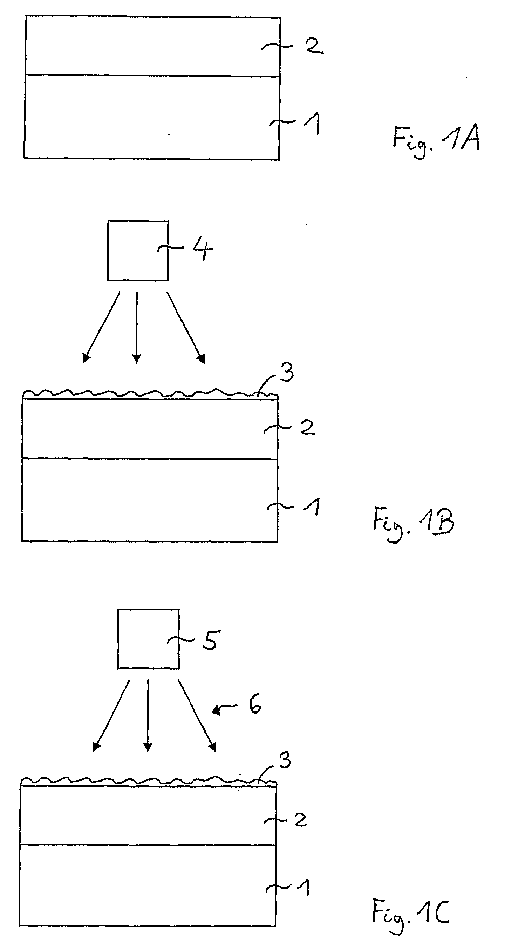

Wie in Figur 1A dargestellt, wird bei einem ersten Zwischenschritt eines erfindungsgemäßen Verfahrens eine beschlagsmindernde Polymerschicht 2 auf ein optisches Element 1 aufgebracht. Das optische Element 1 besteht beispielsweise aus Glas oder Kunststoff, insbesondere aus Polymethylmethacrylat, Polycarbonat, Polyethersulfon, Polycycloolefin, CR39, Polythiourethan, Polyethylenterephtalat (PET) oder Triacetylacetat (TAC).

Die beschlagsmindernde Polymerschicht 2 weist typischerweise eine Dicke von 1 µm bis 20 µm auf.

Die beschlagsmindernde Polymerschicht 2 ist bevorzugt eine Lackschicht, insbesondere eine thermisch härtbare oder mittels UV-Licht härtbare Lackschicht, die beispielsweise ein Polyurethan, ein Polyol, eine Poly(ethylen-alt-maleinsäure), ein Siloxan oder ein Acrylat enthält. Das Aufbringen der beschlagsmindernden Polymerschicht 2 kann zum Beispiel mittels Vakuumverdampfung oder alternativ durch ein Tauchverfahren erfolgen.

Bei dem in Figur 1B dargestellten Verfahrensschritt wird eine dünne Schicht 3 auf die beschlagsmindernde Polymerschicht 2 aufgebracht. Die dünne Schicht 3 ist vorzugsweise eine Oxidschicht, eine Nitridschicht oder eine Fluoridschicht. Insbesondere sind dünne Schichten aus TiO₂, SiO₂, MgF₂ oder aus einem Siliziumnitrid geeignet.

Bei der dünnen Schicht 3 handelt es sich vorzugsweise um eine inselförmige Schicht, das heißt um eine Schicht, deren Wachstum derart im Anfangsstadium unterbrochen wurde, dass die Schicht noch nicht zu einer kontinuierlichen Schicht zusammengewachsen ist.

Die dünne Schicht 3 weist bevorzugt eine Dicke von 2 nm oder weniger, besonders bevorzugt von 1,5 nm oder weniger auf. Unter der Dicke der dünnen Schicht 3 wird dabei, da es sich bei der dünnen Schicht 3 insbesondere um eine inselförmige Schicht handeln kann, eine über die Oberfläche der beschlagsmindernden Polymerschicht 2 gemittelte Dicke verstanden. Die mittlere Dicke der dünnen Schicht 3 kann beim Aufwachsen beispielsweise mit einem kalibrierten Schwingquarzmesssystem bestimmt werden, wobei die mittlere Schichtdicke aus der aufgebrachten Masse berechnet wird. Die mittlere Dicke der inselförmigen dünnen Schicht entspricht der Dicke einer geschlossenen gleichmäßig dicken Schicht, die die gleiche Masse wie die tatsächlich aufgebrachte inselförmige Schicht aufweist.

Das Aufbringen der dünnen Schicht 3 erfolgt beispielsweise durch Vakuumbedampfung aus einer Verdampfungsquelle 4. Insbesondere kann es sich bei der Verdampfungsquelle 4 um eine Elektronenstrahlverdampfungsquelle oder um eine thermische Verdampfungsquelle handeln. Alternativ können auch andere PVD-Verfahren zum Aufbringen der dünnen Schicht 3 eingesetzt werden. Insbesondere ist das Aufbringen durch Sputtern, zum Beispiel durch reaktives Magnetronsputtern, geeignet. Das Aufbringen der dünnen Schicht 3 mittels Sputterns hat den Vorteil, dass auch vergleichsweise große Flächen mit der dünnen Schicht 3 beschichtet werden können. Beispielsweise ist es möglich, auch größere optische Elemente 1 mit einer Größe von beispielsweise 50 cm x 50 cm oder mehr zu beschichten.

Nachfolgend wird, wie in Figur 1C dargestellt, ein Plasmaätzprozess zur Erzeugung einer Nanostruktur in der beschlagsmindernden Polymerschicht 2 durchgeführt. Das Plasmaätzen erfolgt dabei durch die vorzugsweise inselförmige dünne Schicht 3 hindurch. Das Plasmaätzverfahren wird vorzugsweise bei einer Substrattemperatur von weniger als 100 °C durchgeführt. Damit das Plasma 6 einen Materialabtrag der beschlagsmindernden Polymerschicht 2 bewirkt, wird eine Plasmaleistung von vorzugsweise mehr als 100 W eingesetzt.

Zur Erzeugung des Plasmas 6 wird beispielsweise eine Plasmaionenquelle 5 eingesetzt. Insbesondere kann es sich bei dem Plasma um ein Argonplasma handeln, dem Sauerstoff zugeführt wird. In dem Plasma 6 werden hochenergetische Ionen zum Substrat hin beschleunigt und erzeugen auf diese Weise die Nanostruktur. Eine geeignete Plasmaionenquelle 5 und zur Durchführung des Plasmaätzprozesses geeignete Betriebsparameter sind beispielsweise aus der Druckschrift DE 10241708 B4 bekannt und werden daher an dieser Stelle nicht näher erläutert. Anstelle dieser im Stand der Technik beschriebenen Plasmaionenquelle, die typischerweise in Vakuumbedampfungsanlagen zur thermischen und/oder Elektronenstrahlverdampfung eingesetzt wird, kann der Plasmaätzprozess auch mit anderen Plasmaquellen durchgeführt werden. Zum Beispiel ist auch eine Hochfrequenz-Plasmaquelle geeignet, die als Ätzstation in einer Sputteranlage angeordnet sein kann.

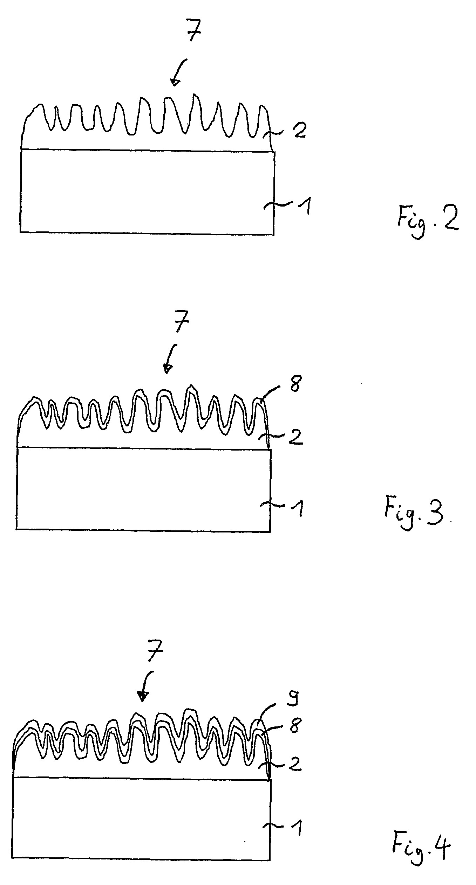

Auf diese Weise wird das in Figur 2 dargestellte optische Element 1 gemäß einem ersten Ausführungsbeispiel der Erfindung hergestellt, das eine beschlagsmindernde Polymerschicht 2 aufweist, an deren Oberfläche eine reflexionsmindernde Nanostruktur 7 ausgebildet ist. Die zuvor aufgebrachte dünne Schicht ist bei dem Plasmaätzprozess ganz oder zumindest teilweise von der Oberfläche der beschlagsmindernden Polymerschicht 2 abgetragen worden. Die Nanostruktur 7 erstreckt sich vorzugsweise von der Oberfläche der beschlagsmindernden Polymerschicht 2 bis in eine Tiefe von mehr als 50 nm in die Polymerschicht 2 hinein. Besonders bevorzugt erstreckt sich die Nanostruktur 7 sogar bis in eine Tiefe von 100 nm oder mehr in die beschlagsmindernde Polymerschicht 2 hinein. In lateraler Richtung betragen die Strukturgrößen der Nanostruktur 7 vorzugsweise 70 nm oder weniger, das heißt es wird ein vergleichsweise großes Aspektverhältnis erzielt.

Bei einer bevorzugten Ausführungsform der Erfindung wird, wie in Figur 3 dargestellt, nach der Erzeugung der Nanostruktur 7 eine transparente Schutzschicht 8 auf die Nanostruktur 7 aufgebracht. Durch die transparente Schutzschicht 8 wird die Nanostruktur 7 vor äußeren Einflüssen, insbesondere vor einer mechanischen Beschädigung geschützt. Insbesondere wird dadurch die Gefahr vermindert, dass die Nanostruktur 7 bei einer Reinigung des optischen Elements 1 beschädigt wird. Die mit der Nanostruktur 7 versehene Oberfläche kann nach dem Aufbringen der Schutzschicht beispielsweise mit einem Tuch abgerieben werden und kann insbesondere mit Ethanol gereinigt werden, ohne dass die Nanostruktur mechanisch beschädigt wird.

Durch die transparente Schutzschicht 8 wird die reflexionsmindernde Wirkung der erzeugten Nanostruktur 7 nicht oder nur unwesentlich beeinträchtigt, wenn die Schichtdicke 50 nm, besonders bevorzugt 40 nm, nicht übersteigt. Bevorzugt weist die transparente Schutzschicht 8 daher eine Dicke zwischen einschließlich 10 nm und einschließlich 50 nm auf.

Um die reflexionsmindernde Wirkung der Nanostruktur 7 nicht zu beeinträchtigen, ist es weiterhin vorteilhaft, wenn die transparente Schutzschicht 8 einen geringen Brechungsindex aufweist. Bevorzugt ist die transparente Schutzschicht 8 eine SiO₂-Schicht.

Bei einem weiteren Ausführungsbeispiel der Erfindung ist, wie in Figur 4 dargestellt, zusätzlich eine hydrophobe Schicht 9 auf die transparente Schutzschicht 8 aufgebracht. Die hydrophobe Schicht 9 ist vorzugsweise eine sehr dünne Schicht mit einer Dicke zwischen 1 nm und 10 nm, besonders bevorzugt von weniger als 5 nm. Durch die hydrophobe Schicht 9 wird insbesondere die Reinigung der mit der Nanostruktur versehenen Oberfläche erleichtert.

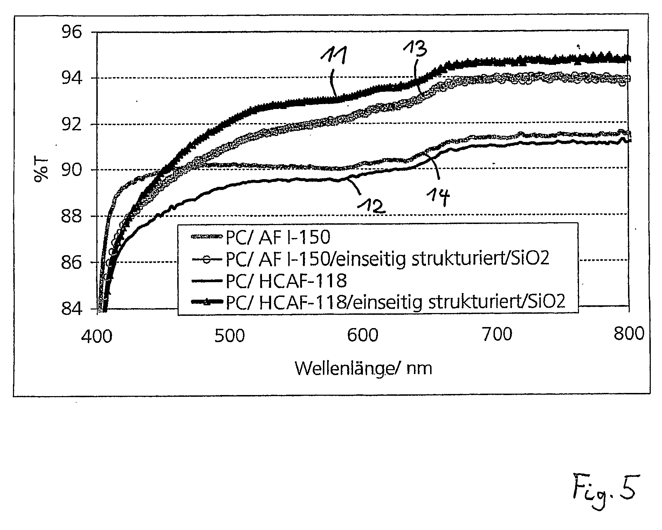

In Figur 5 ist die Transmission von zwei Proben, die jeweils eine beschlagsmindernde Polymerschicht aufweisen, jeweils vor und nach der Erzeugung einer erfindungsgemäßen Nanostruktur an der Oberfläche der beschlagsmindernden Schicht dargestellt.

Die Kurve 12 stellt die gemessene Transmission einer ersten Probe vor der Erzeugung der Nanostruktur dar. Bei der ersten Probe handelt es sich um eine Polycarbonatscheibe, auf die eine 8 µm dicke beschlagsmindernde Polymerschicht aus dem Polymer HCAF-118 (Exxene Corporation) aufgebracht ist.

Die Kurve 11 zeigt die gemessene Transmission der ersten Probe nach der Durchführung des erfindungsgemäßen Verfahrens zur Herstellung einer Nanostruktur an der Oberfläche der beschlagsmindernden Schicht. Der Vergleich zeigt, dass die Transmission im sichtbaren Spektralbereich (430 nm bis 700 nm) nach der Herstellung der Nanostruktur (Kurve 11) gegenüber der unbehandelten Probe (Kurve 12) um bis zu 3,5 % erhöht wurde. Die im Wellenlängenbereich von 420 nm bis 700 nm gemittelte Restreflexion dieser Probe beträgt nach der Erzeugung der Nanostruktur weniger als 1 %. Geringe Transmissionsverluste durch Streuung treten nur bei Wellenlängen von weniger als 450 nm auf und sind vom menschlichen Auge nicht nachweisbar. Auch bei schräg einfallendem Licht erscheint die Oberfläche farbneutral und entspiegelt.

Die Herstellung der ersten Probe erfolgte durch Aufbringen einer 8 µm dicken des beschlagsmindernden Polymers HCAF-118 auf die Polycarbonatscheibe mittels eines Tauchverfahrens. Zur Erzeugung der Nanostruktur wurde nachfolgend eine weniger als 2 nm dicke dielektrische Schicht aus TiO₂ auf die beschlagsmindernde Polymerschicht aufgebracht. Die Erzeugung der Nanostruktur erfolgte mittels einer Plasmaquelle vom Typ APS der Firma Leybold Optics bei einer Ätzzeit von 180 s in einem Argon/Sauerstoff-Plasma. Dabei wurden Argon mit einer Flussrate von 14 sccm und Sauerstoff mit einer Flussrate von 30 sccm in die Vakuumkammer eingelassen. Der Betrieb der Plasmaquelle erfolgte mit einer BIAS-Spannung von 120 V bei einem Entladestrom des Plasmas von 50 A.

Nach der Erzeugung der Nanostruktur wurde eine 40 nm dicke transparente Schutzschicht aus SiO₂ mittels

Elektronenstrahlverdampfung aufgebracht. Durch den gleichzeitigen Betrieb der Ionenquelle mit einer Bias-Spannung von 120 V bei einem Plasma-Entladestrom von 50 A wurde die Schutzschicht beim Aufwachsen hoch verdichtet.

In Figur 5 ist weiterhin die gemessene Transmission als Funktion der Wellenlänge für eine zweite Probe dargestellt, bei der eine Polycarbonatscheibe mit einer 8 µm dicken Polymerschicht aus dem beschlagsmindernden Polymer AFI-150 (Exxene Corporation) beschichtet wurde. Kurve 14 stellt die Transmission vor der Erzeugung einer Nanostruktur und Kurve 13 die Transmission nach der Erzeugung einer Nanostruktur mit dem erfindungsgemäßen Verfahren dar.

Bei der zweiten Probe wurde zur Herstellung der Nanostruktur zunächst eine 1 nm dicke SiO₂-Schicht durch Magnetronsputtern auf die beschlagsmindernde Polymerschicht aufgebracht. Der Plasmaätzprozess wurde in diesem Fall im Plasma einer Magnetron-Sputteranlage mit einer Ätzzeit von 300 s durchgeführt. Die weiteren Verfahrensschritte entsprechen dem zuvor beschriebenen Beispiel.

Der Vergleich der Kurven 13 und 14 zeigt, dass auch bei der zweiten Probe die Transmission im sichtbaren Spektralbereich durch die Ausbildung der Nanostruktur an der Oberfläche der beschlagsmindernden Polymerschicht deutlich erhöht wurde.

Bei beiden zuvor beschriebenen Proben wurde nach einer Lagerung der Proben bei -6 °C und nachfolgendem Transfer nach 20 °C bei 70% Luftfeuchte kein Beschlag festgestellt. Auch nach dem Anhauchen der Probe nach einer Lagerung bei - 2°C trat kein Beschlag auf.

Weiterhin hat sich vorteilhaft herausgestellt, dass die Proben gemäß den Ausführungsbeispielen der Erfindung eine hohe mechanische Stabilität aufweisen. So konnten bei einem Abriebtest mit einem Tuch bei einer Last von 5 N (nach DIN ISO 9211-4) bei den Proben 1 und 2, die eine mit einer Schutzschicht versehene Nanostruktur aufweisen, auch nach 100 Wiederholungen noch keine sichtbare Schäden festgestellt werden.

Bei einem weiteren Ausführungsbeispiel wurden Proben, die wie zuvor genannte Probe 1 hergestellt wurden, nach der Herstellung der Nanostruktur und dem Aufbringen der Schutzschicht mittels Vakuumbeschichtung durch thermisches Verdampfen zusätzlich mit einem fluorhaltigen organischen Material beschichtet.

Als Ausgangsmaterial für die thermische Verdampfung wurden dabei die Materialien WR2^{™} der Firma Merck oder Everclean^{™} der Firma Umicore verwendet. Die Schichtdicken der aufgebrachten Schichten betrugen dabei weniger als 5 nm. Es hat sich herausgestellt, dass durch das nachträgliche Aufbringen einer derartigen hydrophoben Schicht die beschlagsmindernde Wirkung der beschlagsmindernden Polymerschicht nur um etwa 5 s bis 30 s verzögert wird. Die angegebene Zeit bezieht sich dabei auf die Zeit bis zum Erhalt einer Transmission von mehr als 85% nach einer Lagerung bei -6 C° und Transfer nach 20 C° bei 70% Luftfeuchte. Die gleichen Ergebnisse wurden nach einer Lagerung bei -2 C° beim Anhauchen der Proben erzielt. Weiterhin wurde festgestellt, dass die Proben nach dem Aufbringen der hydrophoben Schicht einen Kontaktwinkel von mehr als 110°, also superhydrophobe Eigenschaften, aufweisen. Die auf diese Weise hergestellte Beschichtung zeichnet sich also vorteilhaft dadurch aus, dass sie sowohl antireflektierend als auch beschlagsmindernd wirkt und außerdem hydrophob und mechanisch hoch stabil ist.

## Patentansprüche

1. Verfahren zur Herstellung einer reflexions- und beschlagsmindernden Schicht auf der Oberfläche eines optischen Elements (1),
wobei
- eine beschlagsmindernde Polymerschicht (2) auf die Oberfläche des optischen Elements (1) aufgebracht wird,
- eine dünne Schicht (3) auf die beschlagsmindernde Polymerschicht (2) aufgebracht wird, und
- nachfolgend mittels eines Plasmaätzverfahrens eine Nanostruktur (7) an der Oberfläche der beschlagsmindernden Polymerschicht (2) erzeugt wird.

2. Verfahren nach Anspruch 1,
**dadurch gekennzeichnet, dass**
die dünne Schicht (3) eine Oxidschicht, eine Nitridschicht oder eine Fluoridschicht ist.

3. Verfahren nach Anspruch 2,
**dadurch gekennzeichnet, dass**
die dünne Schicht (3) Siliziumoxid, Siliziumnitrid, Titanoxid oder Magnesiumfluorid enthält.

4. Verfahren nach einem der vorhergehenden Ansprüche,
**dadurch gekennzeichnet, dass**
die dünne Schicht (3) eine mittlere Dicke von 2 nm oder weniger aufweist.

5. Verfahren nach einem der vorhergehenden Ansprüche,
**dadurch gekennzeichnet, dass**
die dünne Schicht (3) eine inselförmige Schicht ist.

## Claims

1. Method for producing a reflection- and fog-reducing layer on the surface of an optical element (1), wherein
- a fog-reducing polymer layer (2) is applied to the surface of the optical element (1),
- a thin layer (3) is applied to the fog-reducing polymer layer (2), and
- a nanostructure (7) is subsequently created on the surface of the fog-reducing polymer layer (2) by means of a plasma etching process.

2. Method according to Claim 1,
**characterized in that**
the thin layer (3) is an oxide layer, a nitride layer or a fluoride layer.

3. Method according to Claim 2,
**characterized in that**
the thin layer (3) comprises silicon oxide, silicon nitride, titanium oxide or magnesium fluoride.

4. Method according to one of the preceding claims,
**characterized in that**
the thin layer (3) has an average thickness of 2 nm or less.

5. Method according to one of the preceding claims,
**characterized in that**
the thin layer (3) is an island-like layer.

## Revendications

1. Procédé pour la réalisation d'une couche diminuant la réflexion et la condensation à la surface d'un élément optique (1),
- une couche de polymère (2) diminuant la condensation étant appliquée à la surface de l'élément optique (1),
- une couche mince (3) étant appliquée sur la couche de polymère (2) diminuant la condensation et
- une nanostructure (7) étant ensuite générée au moyen d'un procédé de décapage au plasma à la surface de la couche de polymère (2) diminuant la condensation.

2. Procédé selon la revendication 1, **caractérisé en ce que** la couche mince (3) est une couche d'oxyde, une couche de nitrure ou une couche de fluorure.

3. Procédé selon la revendication 2, **caractérisé en ce que** la couche mince (3) contient de l'oxyde de silicium, du nitrure de silicium, de l'oxyde de titane ou du fluorure de magnésium.

4. Procédé selon l'une quelconque des revendications précédentes, **caractérisé en ce que** la couche mince (3) présente une épaisseur moyenne de 2 nm ou moins.

5. Procédé selon l'une quelconque des revendications précédentes, **caractérisé en ce que** la couche mince (3) est une couche en forme d'îlots.
